# EUROPEAN PATENT SPECIFICATION

(11) **EP 1 891 361 B1**
(45) Date of publication and mention of the grant of the patent: **11.03.2009**
(21) Application number: 06779721.7
(22) Date of filing: 15.06.2006
(51) Int. Cl.: F16K 25/00, F16K 31/06

(54) **SOLENOID VALVE**
MAGNETVENTIL
ELECTROVANNE

(30) Priority: 17.06.2005 IT MI20051148
(43) Date of publication of application: 27.02.2008
(73) Proprietor: R.P.E. S. r. l., 22070 Carbonate (IT)
(72) Inventor: BERLUSCONI, Giordano, I-22070 Veniano (IT)
(74) Representative: Jorio, Paolo
(86) International application number: PCT/IB2006/001600
(87) International publication number: WO 2006/134479

(56) References cited:
- FR-A1- 2 266 834
- US-A- 2 360 733
- US-A- 2 726 676
- US-A- 2 970 802
- US-A- 2 996 080
- US-A- 3 023 777
- US-A- 4 376 447
- US-A- 5 188 017

## Description

### TECHNICAL FIELD

The present invention relates to a flow cut-off solenoid valve in a feeding circuit of a fluid containing water vapour.

In particular, the present invention relates to a flow cut-off solenoid valve in a feeding circuit of a fluid containing water vapour in a household appliance.

### BACKGROUND ART

The use of water vapour has multiple applications in the household appliance sector. It will suffice to mention surface washing machines equipped with steam jet and espresso coffee machines with respective auxiliary systems.

Each of these household appliances comprises a boiler or other vapour generating and water heating devices, a distribution circuit of the fluid containing water vapour and a flow cut-off solenoid valve controlled by the operator.

Generally, a flow cut-off solenoid valve in a feeding circuit of a fluid containing water vapour comprises a guiding cylinder; a slider, which comprises a shutter and a piston slidingly coupled to the guiding cylinder along a determined axis; an operating solenoid of said slider; and a valve body in which a passage section of the fluid is made and adapted to be selectively closed by said shutter.

The type of solenoid valve mentioned above is effective and widely experimented. However, household appliances employing water vapour often present problems of operation linked to the rapid deterioration of the solenoid valve. Among the causes of rapid deterioration of the solenoid valve there is certainly the formation and deposit of lime on the structural elements of the solenoid valve. Concerning this, it must be remembered that lime is released in the vapour generation step and then deposited on the solid parts of the solenoid valve, such as the shutter and valve body. Since household appliances are subjected to discontinuous operation with long pauses, lime solidifies creating scaling also on the elements which should ensure a fluid-tightness, such as the shutter and the valve body.

Documents US 3,023,777;. US 2,996,080; and US 5,118,017 disclose a type of solenoid valves according to which the passage section is defined by an annular wall and the shutter is insertable with interference in said passage section in contact with the annular wall. This type of solenoid valves does not prejudice the tightness between the shutter and the valve body, however this type of valves are unsuitable to operate along a vapour feeding conduit because it does not avoid the formation of scale in the guiding cylinder.

Document US 4,376,447 teaches to separate the guiding cylinder from the vapour by means of an annular membrane connected to the slider and to the valve body. The area delimited by the membrane is occupied by a spring urging the slider (the shutter) in the closed position. The above identified solenoid valve is again unsuitable to operate along a vapour feeding conduit that can reach high operating pressure so as to deform the membrane against the spring with the additional risk of pinching and perforating the membrane. Furthermore, the membrane has a large surface that in case of over-pressure has the tendency of keeping the valve in the open position unless the spring and the solenoid be over-dimensioned.

### DISCLOSURE OF INVENTION

It is the object of the present invention to make a flow cut-off solenoid valve in a vapour feeding conduit which is free from the drawbacks of the solenoid valves of the known type and which at the same time is particularly cost-effective and compact in size, as required for use in the household appliance sector.

According to the present invention a solenoid valve of the type described is made, characterised in that said valve body comprises a cup-shaped body, which is coupled to said cylinder and forms a compartment; and a membrane arranged in said compartment so as to fluid-tightly separate the piston from the fluid in that said guiding cylinder presents an undulated face without edges and adapted to be arranged in contact with said membrane.

According to the invention, the membrane prevents the deposit of lime on the piston and ensures, in time, an optimal coupling between the piston and the guiding cylinder and the undulated face prevent pinching and perforating the membrane. Furthermore, the undulated face acts as a resting surface for the membrane so that the force needed for closing the shutter, at least the static force, is rather low.

### BRIEF DESCRIPTION OF THE DRAWINGS

For a better understanding of the invention, it will now be described an embodiment only by way of non-limitative example, and with reference to the accompanying drawings, in which:
- figure 1 is a longitudinal section view, with parts removed for clarity, of a solenoid valve made according to the present invention in a first operative position;
- figure 2 is a longitudinal section view, with parts removed for clarity, of the solenoid valve in figure 1 in a second operative position;
- figure 3 is a sectional, magnified view of a detail in figure 2; and
- figure 4 is a sectional, magnified view of a detail in figure 1.

### BEST MODE FOR CARRYING OUT THE INVENTION

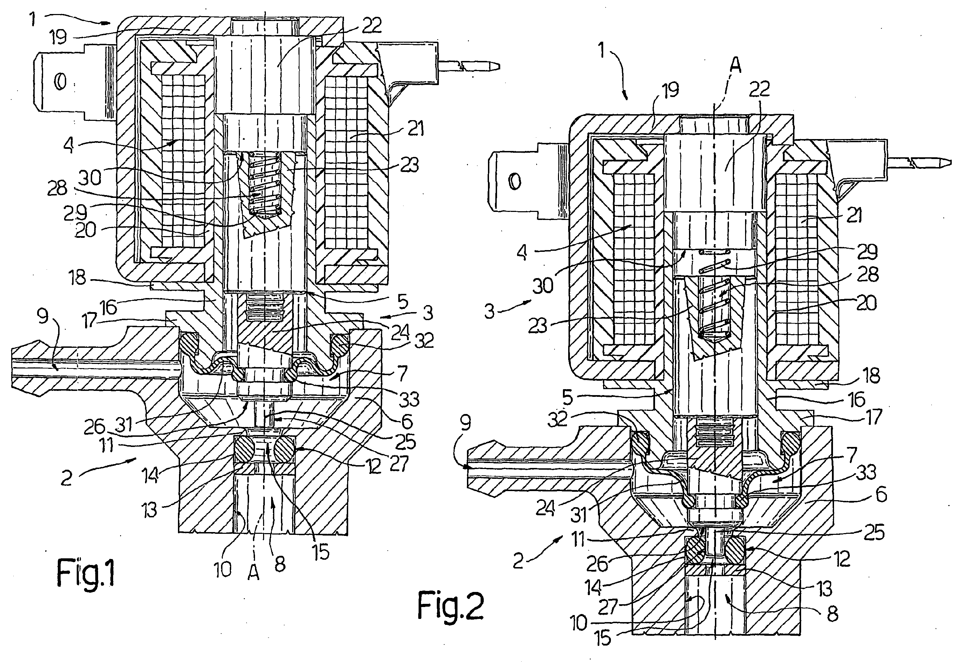

With reference to figure 1 or 2, it is indicated as a whole by 1 a flow cut-off solenoid valve arranged along a feeding circuit (not shown) of a fluid containing water vapour in a household appliance (not shown). The solenoid valve 1 prevalently extends along an axis A and comprises a valve body 2 assembled to a structure 3, which supports a solenoid 4 and a mobile slider 5 between a first operative position (open solenoid valve, as shown in figure 1) and a second operative position (closed solenoid valve, as shown in figure 2).

The valve body 2 comprising a cup-shaped body 6 which defines a compartment 7 is arranged to be coupled with structure 3 and is in communication with a feeding conduit 8 and a delivery conduit 9.

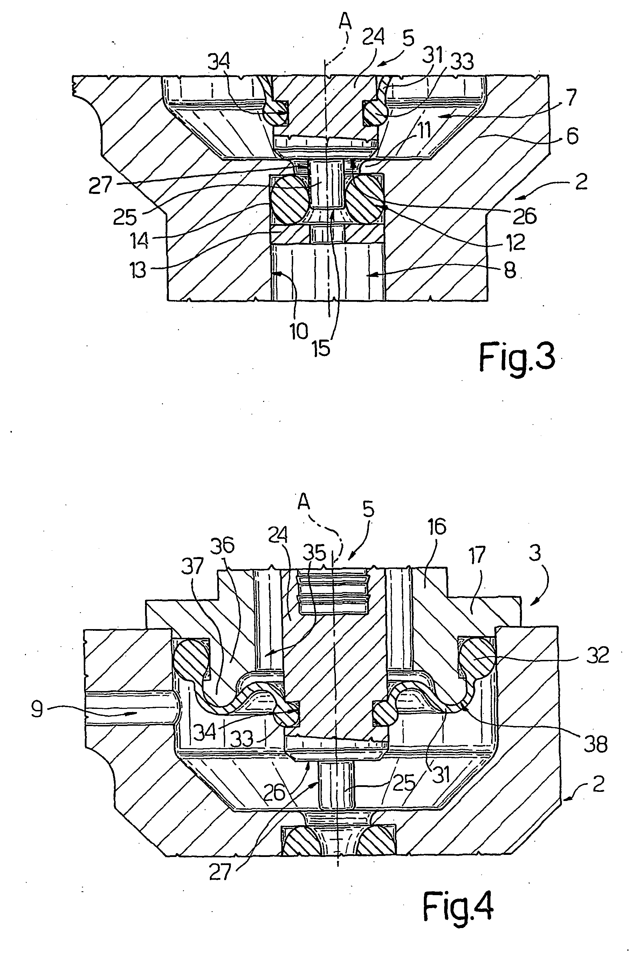

As better shown in figure 3, the conduit 8 is defined by a hole 10 with axis A, along which, at the confluence of conduit 8 with compartment 7 of the cup-shaped body 6, a thrust ring 11 is arranged which is integrally made in the valve body 2 and whose diameter is smaller than the diameter of hole 10. The valve body 2 comprises an annular o-ring type seal 12, which is abuttingly arranged against ring 11 and is maintained in such position by a stop ring 13, which is driven by interference in hole 8. Seal 12 presents an oval section annular wall 14, which defines a passage section 15 of the fluid along the feeding conduit 8.

From a constructive point of view, seal 12 may be fixed in conduit 8 with any tool suitable to prevent sliding of the same along axis A. For example, according to a variant not shown, thrust ring 11 may be driven in hole 10, while stop ring 13 may be integrally made in the valve body 2. According to a further variant (not shown), seal 12 is inserted in an annular groove made in the feeding conduit 8.

With reference to figures 1 and 2, structure 3 comprises a cylinder 16 coaxial to axis A and two annular flanges 17 and 18 which protrude from cylinder 16. Flange 17 is adapted to couple with the valve body 2, while flange 18 supports the solenoid valve 4. Structure 3 comprises a skirt 19 closed about a solenoid valve 4, which presents annular shape, comprises a core 20 and an electrical winding 21 and extends about a guiding cylinder 16; and a cylindrical body 22 of magnetic flow conducting material, with a first portion inserted inside the cylinder 16, and a second portion whose diameter is larger than the first portion and is in direct contact with the core 20. The skirt 19 encloses at least in part also the cylindrical body 22 and the electrical connections.

Slider 5 comprises a piston 23, which is made of magnetic flow conducting material and slides inside a cylinder 16; an elongated body 24, which is firmly anchored to the piston 23; and a shutter 25, which has the shape of an elongated body and is adapted to be selectively inserted in the passage section 15 defined by the annular wall 14. The elongated body 24 has a flat face 26, which is adapted to be abuttingly arranged against the cup-shaped body 6, specifically against the thrust ring 11, which defines the end-of-stroke position of the second operative position (figures 2 and 3).

The shutter 25 is defined by an essential cylindrical appendix, whose cylindrical side face 27 has a larger diameter than the diameter of the passage section 15. In this way, the coupling between the shutter 25 and the wall 14 is a coupling with interference.

Slider 5, or better in the case in point piston 23, present a cylindrical cavity 28 which extends along axis A, is arranged on the opposite side with respect to the elongated body 24 and accommodates spring 29, which is abutting against a face 30 of the cylindrical body 22 so as to maintain slider 5 separated from cylindrical body 22. In other words, spring 29 holds slider 5 in the second operative position.

Solenoid valve 1 further comprises an annular membrane 31, which is arranged in compartment 7 and prevents the fluid from occupying the coupling zone between slider 5 and cylinder 16. Membrane 31 is externally delimited by a seal 32 secured between the valve body 2 and the structure 3, and inside by a seal 33, which is arranged about the elongated body 24. Specifically, seal 33 is accommodated in an annular groove 34 made in the elongated body 24 itself.

Cylinder 16 presents a segment 35 extending belong flange 17 and in compartment 7. Segment 35 presents a first cylindrical portion 36 and a second flared portion 37, which protrudes outwards. Portions 36 and 37 are delimited by a curved face 38 without edges adapted to be arranged in contact with the membrane 31. Seal 32 is closed between portions 26 and 36, cup 6 and flange 17. Furthermore, in the first operative position (figure 4) the membrane 31 is arranged in contact with the cylinder 16 without interfering with the edges so as to preserve their integrity.

In use, the solenoid valve 1 is normally closed, i.e. arranged in the second operative position shown in figures 2 and 3. Shutter 25 is maintained in passage section 15 within the annular wall 14 by spring 29 which acts directly on slider 5. Energising solenoid 4 determines a magnetic flow whose course is defined by core 20, cylindrical body 22 and piston 23. The magnetic flow overcomes the force exerted by spring 29 and determines the approach of piston 23 to cylindrical body 22 and the raising of shutter 25 (figure 1). The interruption of electrical current to solenoid 4 determines the lowering of shutter 25 again.

The particular efficiency of the solenoid valve 2 object of the present invention consists in that the shutter 25 rubs against the walls 14, thus scraping off the possible deposit of lime from the walls 14 and the shutter 25 itself.

Furthermore, the membrane 31 protects the coupling between cylinder 16 and piston 23 from the deposit of lime scaling. In actual fact, membrane 31 prevents the fluid from coming into contact with cylinder 16 and piston 23. The deformability of the annular rubber wall 14 presents the advantage of not requiring high insertion and extraction forces of the shutter 25 and, at the same time, facilitates the detachment of possible lime scaling.

## Claims

1. A flow cut-off solenoid valve in a fluid feeding circuit containing water vapour, the solenoid valve comprising a guiding cylinder (16); a slider (5), which comprises a shutter (25) and a piston (23) slidingly coupled to the guiding cylinder (16) along a determined axis (A); a solenoid (4) for actuating said slider (5); and a valve body (2) in which a passage section (15) of the fluid is made adapted to be selectively closed by said shutter (25); the passage section (15) being defined by an annular wall (14) and the shutter (25) is insertable with interference in said passage section (15) in contact with the annular wall (14); the solenoid valve being **characterised in that** said valve body (2) comprises a cup-shaped body (6), which is coupled to said cylinder (16) and forms a compartment (7) ; and a membrane (31) arranged in said compartment (7) so as to fluid-tightly separate the piston (23) from the fluid **in that** said guiding cylinder (16) presents an undulated face (38) without edges and adapted to be arranged in contact with said membrane (31).

2. A solenoid valve according to claim 1, **characterised in that** said annular wall (14) is elastically yielding.

3. A solenoid valve according to claim 2, **characterised in that** said elastically yielding annular wall (14) is formed by a annular rubber seal (12).

4. A solenoid valve according to any of the claims from 1 to 3, **characterised in that** said shutter (25) presents a cylindrical side wall (27) having an external diameter larger than the diameter of the passage section (15).

5. A solenoid valve according to claim 5, **characterised in that** said slider (5) comprises an elongated body (24) having a flat face (26) from which said shutter (25) protrudes; said cylindrical body (24) being selectively arranged against said valve body (2) so as to make a stopper for said slider (5) and said shutter (25).

6. A solenoid valve according to any one of the foregoing claims, **characterised in that** said membrane (31) presents an annular shape and is coupled to said slider (5) and to said valve body (2).

7. A solenoid valve according to any one of the foregoing claims, **characterised in that** said membrane (31) presents an internal seal (33) coupled to said slider (6).

8. A solenoid valve according to claim 7, **characterised in that** said slider (5) presents a groove (34) in which said internal seal (33) is accommodated.

9. A solenoid valve according to any of the claims from 6 to 8, **characterised in that** said membrane comprises an external seal (32) fixed to said valve body (2).

10. A solenoid valve according to claim 9, **characterised in that** said external seal (32) is secured between said valve body (2), said guiding cylinder (16) and a flange (17) integral with said guiding cylinder (16).

## Patentansprüche

1. Strömungsunterbrechungs-Magnetventil in einem Wasserdampf enthaltenden Fluidversorgungskreis, wobei das Magnetventil umfasst: einen Führungszylinder (16); einen Gleiter (5), der einen Verschluss (25) und einen Kolben (23), der mit dem Führungszylinder (16) längs einer gegebenen Achse (A) gleitend gekoppelt ist, aufweist; einen Elektromagneten (4) zum Betätigen des Gleiters (5); und einen Ventilkörper (2), in dem ein Durchlassabschnitt (15) für das Fluid in der Weise ausgebildet ist, dass er durch den Verschluss (25) wahlweise geschlossen werden kann, umfasst; wobei der Durchlassabschnitt (15) durch eine ringförmige Wand (14) definiert ist und der Verschluss (25) in den Durchlassabschnitt (15) in Kontakt mit der ringförmigen Wand (14) mit Übermaß einsetzbar ist; wobei das Magnetventil **dadurch gekennzeichnet ist, dass** der Ventilkörper (2) einen becherförmigen Körper (6), der mit dem Zylinder (16) gekoppelt ist und ein Fach (7) bildet; und eine Membran (31), die in dem Fach (7) angeordnet ist, um den Kolben (23) von dem Fluid fluiddicht zu trennen, umfasst, und dass der Führungszylinder (16) eine wellige Fläche (38) ohne Kanten aufweist und dazu ausgelegt ist, in Kontakt mit der Membran (31) angeordnet zu werden.

2. Magnetventil nach Anspruch 1, **dadurch gekennzeichnet, dass** die ringförmige Wand (14) elastisch nachgibt.

3. Magnetventil nach Anspruch 2, **dadurch gekennzeichnet, dass** die elastisch nachgiebige ringförmige Wand (14) durch eine ringförmige Gummidichtung (12) gebildet ist.

4. Magnetventil nach einem der Ansprüche 1 bis 3, **dadurch gekennzeichnet, dass** der Verschluss (25) eine zylindrische Seitenwand (27) mit einem Außendurchmesser, der größer als der Durchmesser des Durchlassabschnitts (15) ist, aufweist.

5. Magnetventil nach Anspruch 5, **dadurch gekennzeichnet, dass** der Gleiter (5) einen lang gestreckten Körper (24) mit einer ebenen Stirnfläche (26), von der der Verschluss (25) vorsteht, umfasst; und der zylindrische Körper (24) wahlweise an dem Ventilkörper (2) angeordnet ist, um einen Anschlag für den Gleiter (5) und den Verschluss (25) zu bilden.

6. Magnetventil nach einem der vorhergehenden Ansprüche, **dadurch gekennzeichnet, dass** die Membran (31) ringförmig ist und mit dem Gleiter (5) sowie mit dem Ventilkörper (2) gekoppelt ist.

7. Magnetventil nach einem der vorhergehenden Ansprüche, **dadurch gekennzeichnet, dass** die Membran (31) eine mit dem Gleiter (6) gekoppelte Innendichtung (33) aufweist.

8. Magnetventil nach Anspruch 7, **dadurch gekennzeichnet, dass** der Gleiter (5) eine Nut (34) aufweist, in der die Innendichtung (33) aufgenommen ist.

9. Magnetventil nach einem der Ansprüche 6 bis 8, **dadurch gekennzeichnet, dass** die Membran eine Außendichtung (32) aufweist, die an dem Ventilkörper (2) befestigt ist.

10. Magnetventil nach Anspruch 9, **dadurch gekennzeichnet, dass** die Außendichtung (32) zwischen dem Ventilkörper (2), dem Führungszylinder (16) und einem mit dem Führungszylinder (16) einteilig ausgebildeten Flansch (17) befestigt ist.

## Revendications

1. Electrovanne de coupure d'écoulement dans un circuit d'alimentation de fluide contenant de la vapeur d'eau, l'électrovanne comprenant un cylindre de guidage (16) ; un coulisseau (5) qui comprend un obturateur (25) et un piston (23) couplés de manière coulissante au cylindre de guidage (16) le long d'un axe déterminé (A) ; un solénoïde (4) pour actionner ledit coulisseau (5) ; et un corps de vanne (2) dans lequel une section de passage (15) du fluide est adaptée pour être sélectivement fermée par ledit obturateur (25) ; la section de passage (15) étant définie par une paroi annulaire (14) et l'obturateur (25) peut s'insérer par interférence dans ladite section de passage (15) en contact avec la paroi annulaire (14) ; l'électrovanne étant **caractérisée en ce que** ledit corps de vanne (2) comprend un corps en forme de coupelle (6) qui est couplé audit cylindre (16) et forme un compartiment (7) ; et une membrane (31) agencée dans ledit compartiment (7) afin de séparer de manière étanche le piston (23) du fluide **en ce que** ledit cylindre de guidage (16) présente une face ondulée (38) sans bord et adaptée pour être agencée en contact avec ladite membrane (31).

2. Electrovanne selon la revendication 1, **caractérisée en ce que** ladite paroi annulaire (14) est élastiquement peu résistante.

3. Electrovanne selon la revendication 2, **caractérisée en ce que** ladite paroi annulaire élastiquement peu résistante (14) est formée par un joint d'étanchéité annulaire en caoutchouc (12).

4. Electrovanne selon l'une quelconque des revendications 1 à 3, **caractérisée en ce que** ledit obturateur (25) présente une paroi latérale cylindrique (27) ayant un diamètre externe plus grand que le diamètre de la section de passage (15).

5. Electrovanne selon la revendication 5, **caractérisée en ce que** ledit coulisseau (5) comprend un corps allongé (24) ayant une face plate (26) de laquelle ledit obturateur (25) fait saillie ; ledit corps cylindrique (24) étant agencé sélectivement contre ledit corps de vanne (2) afin de réaliser une butée pour ledit coulisseau (5) et ledit obturateur (25).

6. Electrovanne selon l'une quelconque des revendications précédentes, **caractérisée en ce que** ladite membrane (31) présente une forme annulaire et est couplée à ledit coulisseau (5) et audit corps de vanne (2).

7. Electrovanne selon l'une quelconque des revendications précédentes, **caractérisée en ce que** ladite membrane (31) présente un joint d'étanchéité interne (33) couplé audit coulisseau (6).

8. Electrovanne selon la revendication 7, **caractérisée en ce que** ledit coulisseau (5) présente une rainure (34) dans laquelle ledit joint d'étanchéité interne (33) est logé.

9. Electrovanne selon l'une quelconque des revendications 6 à 8, **caractérisée en ce que** ladite membrane comprend un joint d'étanchéité externe (32) fixé sur ledit corps de vanne (2).

10. Electrovanne selon la revendication 9, **caractérisée en ce que** ledit joint d'étanchéité externe (32) est fixé entre ledit corps de vanne (2), ledit cylindre de guidage (16) et un rebord (17) solidaire dudit cylindre de guidage (16).
